# EUROPEAN PATENT APPLICATION

(11) **EP 1 769 708 A1**
(43) Date of publication of application: **04.04.2007**
(21) Application number: 05755545.0
(22) Date of filing: 29.06.2005
(51) Int. Cl.: A47D 15/00, B62B 9/14

(54) **CHILD-CARE INSTRUMENT AND HOOD**

(30) Priority: 09.07.2004 JP 2004203796; 01.04.2005 JP 2005106226
(71) Applicant: Aprica Ikujikenkyukai Aprica Kassai Kabushikikaisha, Osaka-shi, Osaka 542-0082 (JP)
(72) Inventor: KASSAI, Kenzou;, Osaka-shi, Osaka 542-0083 (JP); STORCI, Barbara, c/o Milan Design Center, Milan 20122 (IT); SUZUKI, Sachiyo, APRICA IKUJIKENKYUKAI KASSI KK, Osaka-shi, Osaka 542-0082 (JP); TAKAHASHI, Fumiko, APRICA IKUJIKENKYUKAI KASSI KK, Osaka-shi, Osaaka 542-0082 (JP)
(74) Representative: Feldmeier, Jürgen
(86) International application number: PCT/JP2005/011991
(87) International publication number: WO 2006/006405

(57) **Abstract**

A hood (1) is provided such that opening states of right and left sides can be independently adjusted. The hood (1) comprises a hood body (2), a front cover member (4) connected to the front edge of the hood body (2) to cover the front of a seat and a right side cover member (5) and a left side cover member (6) connected to the right and left side edges of the front cover member (4) to cover the right and left sides of the seat, respectively. The right and left side cover members (5) and (6) are folded so as to be overlapped on the front cover member (4). In addition, a laminated body (3) of the front cover member (4) and the right and left side cover members (5) and (6) are folded so as to be overlapped on the upper surface of the hood body (2).

## Description

### TECHNICAL FIELD

The present invention relates to a child-care instrument such as a child bed, a child safety seat, a baby carriage, and a child-car seat and more particularly, to a hood for covering the upper part of a child receiving space in a child-care instrument.

### BACKGROUND ART

Various kinds of child-care instruments are introduced in the catalog under the supervision of Aprica Child-Care Society "Book of Baby Happiness of Aprica child-raising book in 2004". For example, a child-car seat is described on pages 99 to 136, a baby carriage is described on pages 137 to 172, a baby sling is described on pages 173 to 198, and a child bed and chair is described on pages 198 to 214. Among these child-care instruments, the baby carriage to be used out of doors is provided with a hood as a sunshade.

The hood mounted on the baby carriage has a function to protect the baby sat on the seat from the strong sunlight mainly. The hood comprises a plurality of hood bones and a hood cloth extending over the hood bones. The baby carriage comprising such hood is available in the market. Some baby carriages comprise a ventilation window in the hood cloth to introduce air into the seat.

On a hot and humid day, the seat can be cooled by opening the ventilation window. Meanwhile, it is necessary to close the ventilation window on a cold or windy day. Therefore, in the case of the conventional hood having the ventilation window, a cover member such as a soft cloth for covering the window is provided.

The window provided in the hood is intended for the above ventilation and for observing child behavior in the seat. In the latter case, an opening is provided in the hood cloth and the opening is lined with a transparent film in general. Since the sunlight enters the seat through the transparent film, a cover member such as a soft cloth for covering the window is also provided in order to close the window of the transparent film according to need.

Japanese Unexamined Patent Publication No. 2002-187554 discloses a baby carriage provided with a hood. The hood disclosed in this document comprises a sunshade member provided selectively at a position in which it extends to the front of the hood and a position in which it is housed inside the hood in order to correspond to the change in incident angle of the sunlight.

According to the hood disclosed in the Japanese Unexamined Patent Publication No. 2002-187554, although it corresponds to the change in incident sunlight from the front of the hood with the sunshade member, it is not particularly devised for the change in environment on the sides of the hood.

The baby carriage to be used out of doors is provided with a hood mainly in view of sunshade and protection from blowing dust in many cases. Meanwhile, in the case of indoor child-care instrument, since it is not necessary to consider the sunlight or wind, the upper part of its child receiving space is completely open. However, the inventor of this application has recognized that it is also necessary to cover the upper part of the child receiving space in the child-care instrument to be used in doors. The reasons for the above are as follows.

The first reason relates to a baby having immature eyes. Since the eyes of a newborn baby are immature, the daylight in the room could stimulate the eyes of the baby too much. Similarly, illuminated light could be also too strong for the eyes of the newborn baby. In this point, it is necessary to cover the upper part of the child receiving space in the child-care instrument to be used in doors also in order to protect the newborn baby from the strong stimulation of the light.

The second reason is for adjusting a sleeping environment of the baby. Recently, the sleeping environment of the baby has got worse. This is mostly because of a late-night mother. The mother watches TV until late at night under the illuminated light beside the sleeping baby in some cases. In the atmosphere illuminated brightly, the baby cannot get sufficient sleep. In this point, it is necessary to cover the upper part of the child receiving space in the child-care instrument to be used in doors also to have the baby get enough sleep.

The third reason relates to rhythm of sleep and wakefulness of the baby. The baby regularly repeats the sleep and wakefulness at a constant cycle. This rhythm is called a circadian rhythm and it is said that it is provided according to a change in body temperature. When it is assumed that the rhythm of the body temperature of the human is repeated correctly, the body temperature is highest at 4:00 to 7:00 in the afternoon and then it becomes lower and it is lowest at 4:00 to 7:00 in the morning and then it becomes higher. Considering the biological rhythm for the baby, it seems to be important to make clear distinction between the day and night at the time of sleeping also. More specifically, it seems to be important to make the child receiving space of the child-care instrument darkest when the baby sleeps at night and not to make the child receiving space of the child-care instrument too dark when the baby takes a nap. In this point, it is necessary to cover the upper part of the child receiving space in the child-care instrument to be used in doors also to keep the regular biographic rhythm of the baby.

### DISCLOSURE OF THE INVENTION

It is an object of the present invention to provide a child-care instrument that can promote the healthy growth of a baby.

It is another object of the present invention to provide a hood that can adjust the brightness of the child receiving space of a child-care instrument.

It is still another object of the present invention to provide a hood of a child-care instrument that can flexibly correspond to an environmental change on the side of the hood.

A child-care instrument according to one aspect of the present invention comprises a body forming a child receiving space and a hood mounted on the body so as to cover the upper part of the child receiving space. The hood comprises a cover part spreading over the upper part of the child receiving space. The cover part comprises a plurality of brightness adjusting regions each having a brightness adjusting function to transmitted light.

According to the present invention having the above constitution, since the cover part of the hood has a plurality of brightness adjusting regions, the brightness of the child receiving space can be adjusted in several stages by adjusting the brightness of the light that passes through each brightness adjusting region.

According to one embodiment, the plurality of brightness adjusting regions are positioned on the right and left sides. In this constitution, the brightness of the light can be flexibly adjusted in accordance with the outer environment on the right and left sides of the child-care instrument. In order to more flexibly correspond to it, it is preferable that the plurality of brightness adjusting regions are positioned on the front, rear, right and left sides.

Preferably, each brightness adjusting region comprises an inner sheet positioned inside and an outer sheet overlapped on the inner sheet. The outer sheet is provided so as to be openable. According to one embodiment, the inner sheet is made of a mesh cloth. Furthermore, according to one embodiment, the outer sheet is made of a material that shields ultraviolet rays.

Furthermore, according to one embodiment, the hood comprises a support member mounted on the body, a first hood bone having a lower end turnably connected to the support member, and a second hood bone positioned posterior to the first hood bone and having a lower end turnably connected to the support member. The cover part comprises a front part positioned anterior to the first hood bone, a central part positioned between the first hood bone and the second hood bone, and a rear part positioned posterior to the second hood bone. Each of the front part, the central part and the rear part of the cover part has a plurality of brightness adjusting regions.

More specifically, each of the front part, the central part and the rear part of the cover part has a middle region having a brightness adjusting function, and side regions positioned on both sides of the middle region and having the brightness adjusting function. Preferably, the hood further comprises a third hood bone connected to the lower edge of the rear part of the cover part and having a front end turnably connected to the support member.

A hood of a child-care instrument according to another aspect of the present invention is characterized in that opening states on right and left sides can be independently adjusted.

In the case of the baby carriage as one example of the child-care instrument to which the present invention is to be applied, the original function of the hood of the baby carriage is to shield the sunlight. Meanwhile, the hood interrupts the ventilation of the seat. Thus, according to the present invention, the sunlight from the right or left side can be shielded by adjusting the opening states of the right and left sides independently, and the ventilation is appropriately adjusted according to need. For example, when the ventilation of the seat is to be properly ensured while the sunlight from the left side of the hood is to be shielded, the opening of the left side of the hood is closed and the opening on the right side is opened. In addition, when the sunlight does not enter the seat part from the right and left sides and sufficient ventilation is needed, the openings on both right and left sides are to be open. Furthermore, to protect the child in the seat from wind or dust, the openings on the right and left sides are to be closed.

In addition, as the function of the hood, it is desirable to provide a function to adjust the brightness in the seat. For the newborn baby, the outside brightness could be too strong on a sunny day. In this case also, the brightness in the seat can be adjusted by adjusting the opening states of the right and left sides.

A hood of a child-care instrument in the present invention comprises a hood body, a front cover member connected to the front edge of the hood body to cover the front of a seat, and right and left side cover members connected to the right and left side edges of the front cover member to cover the right and left sides of the seat, respectively. The right and left side cover members are folded so as to be overlapped on the front cover member. A laminated body of the front cover member and the right and left side cover members is folded so as to be overlapped on the upper surface of the hood body.

According to the hood comprising the above constitution, the following four configurations can be implemented.
(1) State in which front and right and left sides of the seat are all open.
(2) State in which the front side of the seat is closed and the right and left sides thereof are open.
(3) State in which the front and left sides of the seat are closed and the right side thereof is open.
(4) State in which the front and right sides of the seat are closed and the left side thereof is open.

According to the above embodiment, preferably the hood body has an opening window at its upper surface, and the laminated body of the front cover member and the right and left side cover members is folded so as to cover the opening window. The mother and the like who operates the baby carriage as one example of the child-care instrument feels relieved when she can observe baby behavior in the seat. According to this preferred embodiment, the mother and the like can observe the baby behavior in the seat by opening the opening window in the upper surface of the hood body.

According to the above embodiment, preferably the opening window is lined with a mesh cloth. Since the mesh cloth has a function to alleviate the brightness, the brightness in the seat can be finely adjusted.

According to the above embodiment, the opening window has a triangular configuration having the front edge of the hood body as a base, for example. Corresponding to this, the laminated body of the front cover member and the right and left side cover members has a triangular configuration having the front edge of the hood body as a base and it is folded so as to cover the opening window. According to this configuration, it is superior in design.

A hood of a child-care instrument according to another embodiment comprises a hood body having opening windows on the right and left sides, a left side cover member covering the opening window on the left side, and a right side cover member covering the opening window on the right side.

According to the hood in the above embodiment, the following three configurations are implemented.
(1) State in which the opening windows on the right and left sides are open.
(2) State in which the opening window on the left side is closed and the opening window on the right side is open.
(3) State in which the opening window on the right side is closed and the opening window on the left side is open.

According to above embodiment, preferably each of the opening windows on the right and left sides is lined with a mesh cloth. When the mesh cloth is provided, the brightness in the seat can be finely adjusted.

A hood of a child-care instrument according to still another aspect of the present invention comprises a first hood bone having an inverted U shape and having both ends supported by a child-care instrument body, a first hood cloth positioned anterior to the first hood bone, and a second hood cloth positioned posterior to the first hood bone. The first hood cloth comprises a first lower layer cloth and a first upper layer cloth to be overlapped on the first lower layer cloth so as to be openable. The first upper layer cloth comprises a left side first upper layer cloth covering the left side region of the first lower layer cloth so as to be openable and a right side first upper layer cloth covering the right side region of the first lower layer cloth so as to be openable. The second hood cloth comprises a second lower layer cloth and a second upper layer cloth to be overlapped on the second lower layer cloth so as to be openable. The second upper layer cloth comprises a left side second upper layer cloth covering the left side region of the second lower layer cloth, and a right side second upper layer cloth covering the right side region of the second lower layer cloth so as to be openable.

According to the present invention in the above constitution, the brightness of the child receiving space can be adjusted in several stages by adjusting the open/closed states of the left side first upper layer cloth, the right side first upper layer cloth, the left side second upper layer cloth and the right side second upper layer cloth. Therefore, the healthy growth of the baby can be promoted by adjusting the brightness of the child receiving space.

According to one embodiment of the present invention, the hood comprises a second hood bone having an inverted U shape so as to support the rear edge of the second hood cloth and having both ends supported by the child-care instrument body, and a third hood cloth positioned posterior to the second hood bone. The third hood cloth comprises a third lower layer cloth and a third upper layer cloth to be overlapped on the third lower layer cloth so as to be openable. The third upper layer cloth comprises a left side third upper layer cloth covering the left side region of the third lower layer cloth, and a right side third upper layer cloth covering the right side region of the third lower layer cloth so as to be openable.

The hood may further comprise a third hood bone having an inverted U shape so as to support the rear edge of the third hood cloth and having both ends supported by the child-care instrument body. In this case, preferably the hood further comprises a base support turnably supporting the first hood bone, the second hood bone and the third hood bone. The base support is detachably connected to the child-care instrument body.

Focusing on the material of the hood cloth, each lower layer cloth is made of a mesh cloth, and each upper layer cloth is made of a material having a high light shielding effect, for example.

Preferably, the first lower layer cloth is designed to be rolled up. When the first lower layer cloth is rolled up, the front of the child receiving space is largely open.

### BRIEF DESCRIPTION OF DRAWINGS

Fig. 1 is a perspective side view showing a hood of a baby carriage according to one embodiment of the present invention;
Fig. 2 is a perspective top view showing the hood of the baby carriage according to one embodiment of the present invention;
Fig. 3 is a view showing a state in which a laminated body comprising a front cover member and right and left side cover members is hung down at the front;
Fig. 4 is a view showing a state in which the front cover member is hung down at the front;
Fig. 5 is a view showing a state in which the front cover member and the left side cover member are exploded;
Fig. 6 is a view showing a state in which the front cover member and the right side cover member are exploded;
Fig. 7 is a schematic view showing a state in which the front cover member and the right and left cover members are exploded;
Fig. 8 is a schematic view showing a state in which the right side cover member is folded from the state shown in Fig 7;
Fig 9 is a view showing a hood of a baby carriage according to another embodiment of the present invention;
Fig. 10 is a schematic view showing a state in which a front cover member and right and left side cover members are exploded in the hood shown in Fig. 9;
Fig. 11 is a view showing a hood of a baby carriage according to still another embodiment of the present invention;
Fig. 12 is a view showing a state in which a left side cover member is folded and an opening window is exploded in the hood shown in Fig. 11 ;
Fig. 13 is a perspective view showing the hood of a baby bed according to still another embodiment of the present invention;
Fig. 14 is a front view showing the hood of the baby bed according to the above embodiment of the present invention;
Fig. 15 is a side view showing the hood of the baby bed according to the above embodiment of the present invention;
Fig. 16 is a back view showing the hood of the baby bed according to the above embodiment of the present invention;
Fig. 17 is a view showing a structure in the vicinity of base ends of a first hood bone, a second hood bone and a third hood bone;
Fig. 18 is a view showing one used example of the hood according to the above embodiment of the present invention;
Fig. 19 is a view showing another used example of the hood according to the above embodiment of the present invention;
Fig. 20 is a view showing still another used example of the hood according to the above embodiment of the present invention;
Fig. 21 is a view showing still another used example of the hood according to the above embodiment of the present invention;
Fig. 22 is a view showing still another used example of the hood according to the above embodiment of the present invention;
Fig. 23 is a view showing still another used example of the hood according to the above embodiment of the present invention;
Fig. 24 is a view showing still another used example of the hood according to the above embodiment of the present invention;
Fig. 25 is a view showing still another used example of the hood according to the above embodiment of the present invention;
Fig. 26 is a schematic view showing another embodiment of the hood;
Fig. 27 is a schematic view showing a state in which an upper layer cloth of the hood shown in Fig. 26 is opened;
Fig. 28 is a schematic side view showing still another embodiment of the hood; and
Fig. 29 is a schematic plan view showing the cover part of the hood shown in Fig. 28.

### BEST MODE FOR CARRYING OUT THE INVENTION

A child-care instrument to which the present invention is applied comprises a body forming a child receiving space and a hood mounted on the body so as to cover the upper part of the child receiving space. This hood includes a cover part spreading over the child receiving space and this cover part includes a plurality of brightness adjustment regions each having a brightness adjustment function.

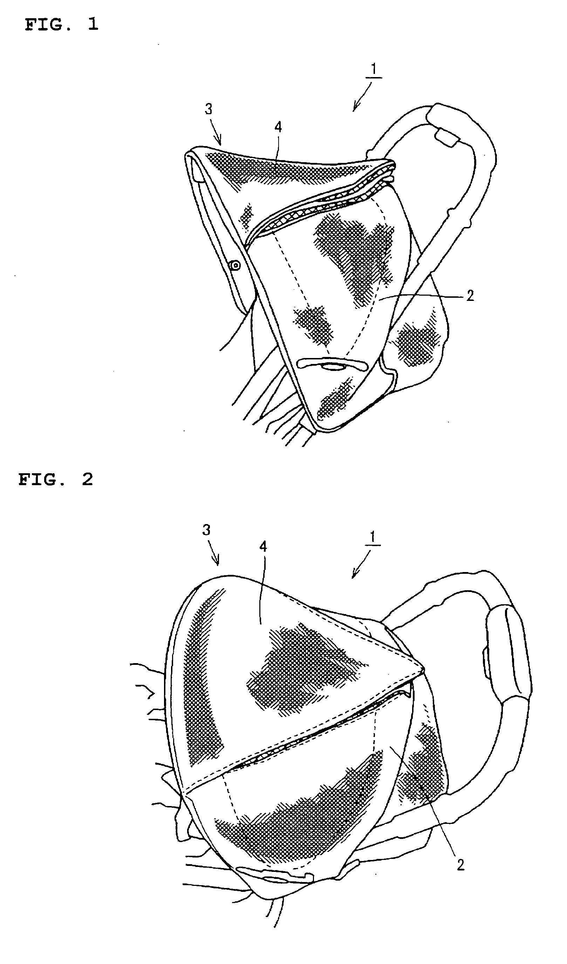

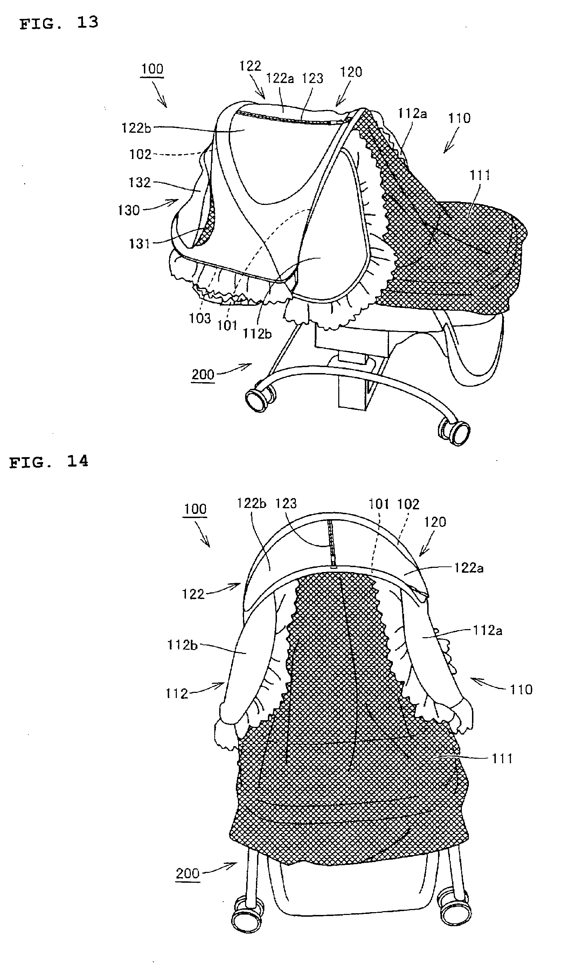

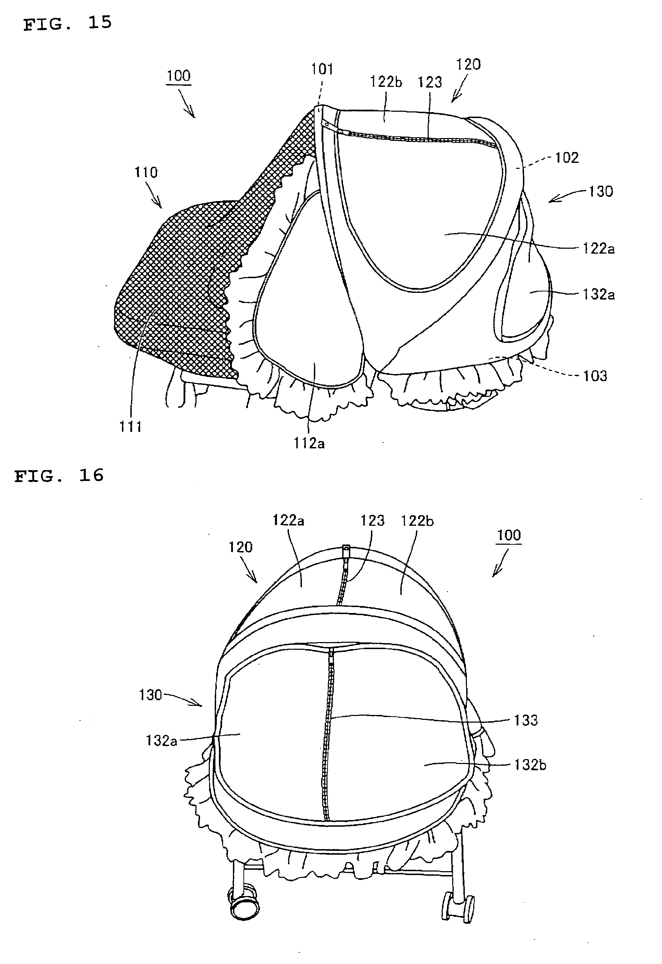

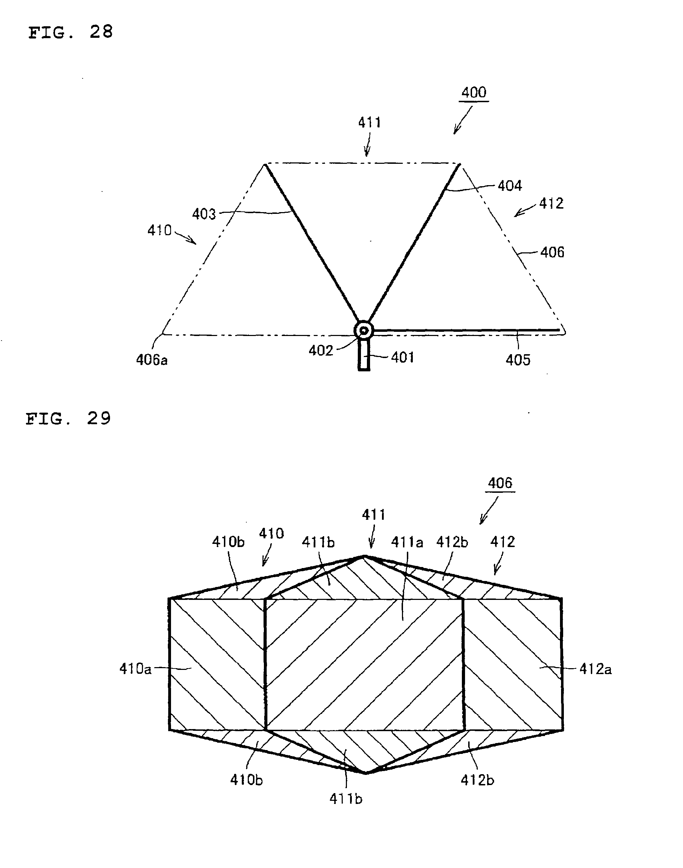

Although the child-care instrument includes a child bed, a child-care chair, a baby carriage, a child-car seat, and the like, Figs. 1 to 12 show a baby carriage as one example of the child-care instrument, Figs. 13 to 27 show a room child bed as another example of the child-care instrument, and Figs. 28 and 29 show the hood of the baby carriage as one example of the child-care instrument. The specific structure of each embodiment will be described hereinafter.

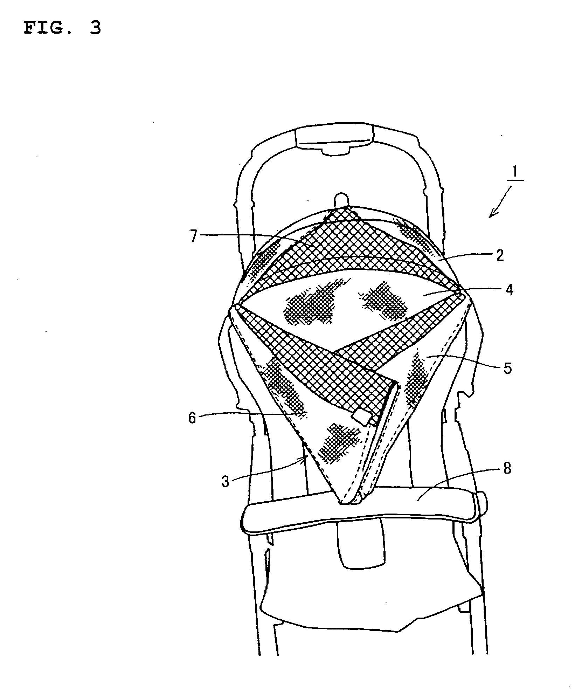

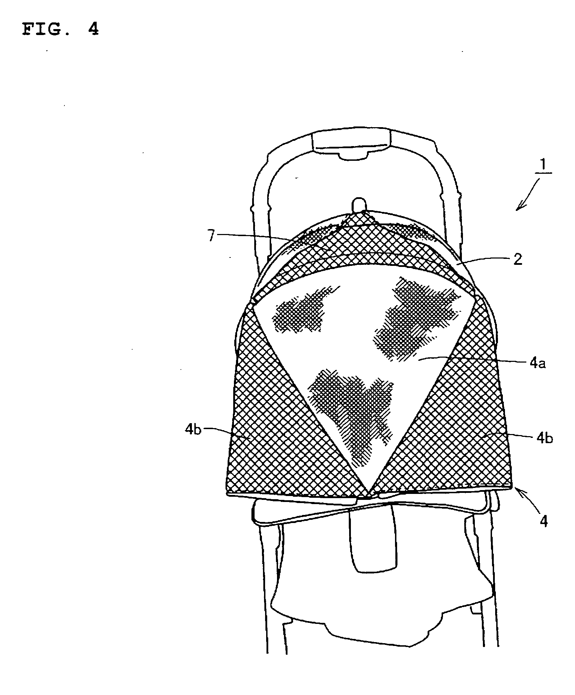

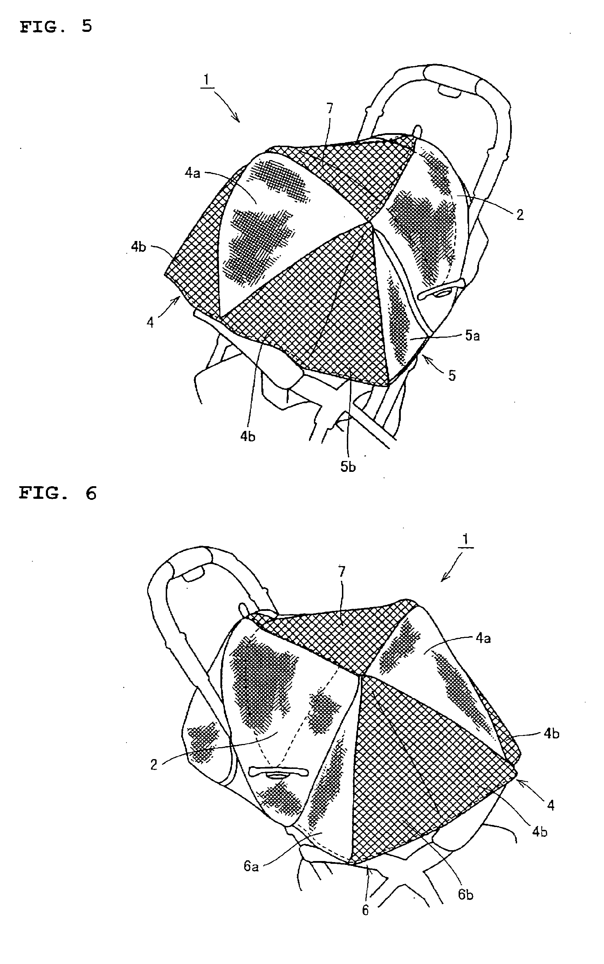

Figs. 1 to 8 show a hood 1 of a baby carriage according to one embodiment of the present invention. According to the hood 1, opening states on right and left sides can be adjusted independently. More specifically, the hood 1 comprises a hood body 2, a front cover member 4 connected to the front edge of the hood body 2 and covering the front of a seat (refer to Fig. 4), and a left side cover member 5 (refer to Fig. 5) and a right side cover member 6 (refer to Fig 6) connected to the left and right side edges of the front cover member 4 and covering the left and right sides of the seat, respectively. The left and right side cover members 5 and 6 are folded so as to be overlapped on the front cover member 4 (refer to Fig. 3). In addition, a laminated body 3 of the front cover member 4, and the left and right side cover members 5 and 6 is folded so as to be overlapped on the upper surface of the hood body 2 (refer to Figs. 1 and 2).

The hood body 2 has an opening window 7 at its upper surface part, and the opening window 7 is lined with a mesh cloth (refer to Figs. 3 to 6). The opening window 7 lined with the mesh cloth has a triangular configuration having the front edge side of the hood body 2 as a base, and the laminated body 3 of the front cover member 4 and the left and right side cover members 5 and 6 also has a triangular configuration having the front edge side of the hood body 2 as a base and it is folded so as to cover the opening window 7.

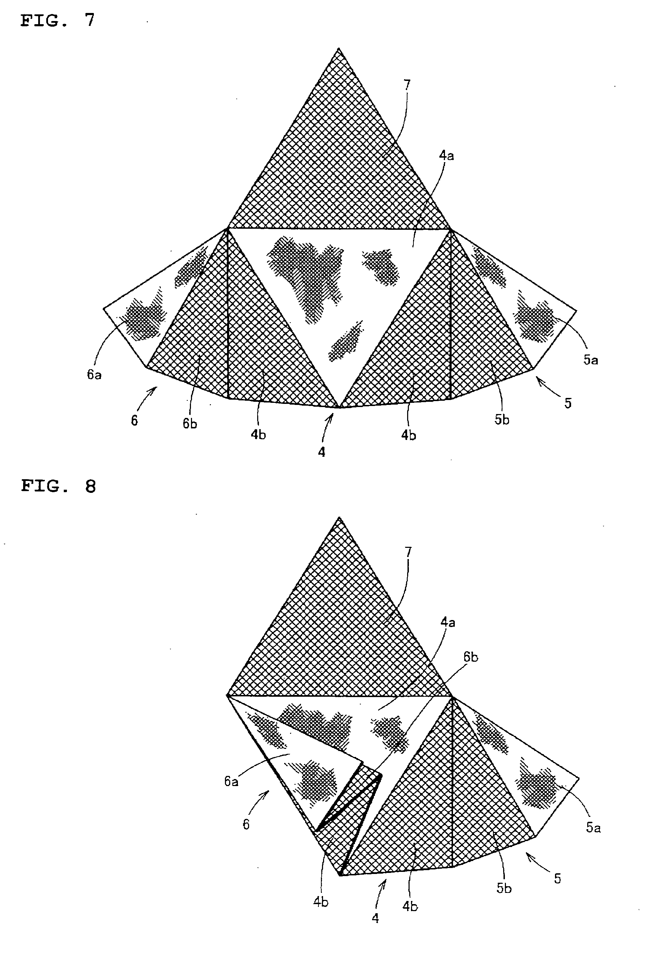

Fig. 7 is a schematic view showing a state in which the opening window 7 of the hood body 2, the front cover member 4, and the left side cover member 5, and the right side cover member 6 are exploded. Fig. 8 is a schematic view showing a state in which the right side cover member 6 is folded so as to be overlapped on the front cover member 4. As shown in the drawing, the front cover member 4 comprises a triangular cloth 4a that is approximately symmetric to the opening window 7 of the hood body 2, and small triangular mesh cloths 4b positioned on both sides of the triangular cloth 4a. The left side cover member 5 comprises a small triangular mesh cloth 5b connected to the mesh cloth 4b of the front cover member 4, and a small triangular cloth 5a connected to the side of the mesh cloth 5b. The right side cover member 6 comprises a small triangular mesh cloth 6b connected to the mesh cloth 4b of the front cover member 4, and a small triangular cloth 6a connected to the side of the mesh cloth 6b.

As described above, since each of the front cover member 4 and the left and right side cover members 5 and 6 has the mesh cloth partially in addition to the mesh cloth on the opening window 7 of the hood body 2, the brightness and ventilation of the seat can be finely adjusted.

As shown in Fig. 8, when the right side cover member 6 is folded, one mesh cloth 4b of the front cover member 4 is overlapped on the cloth 4a, the mesh cloth 6b of the right side cover member 6 is overlapped on the mesh cloth 4b of the front cover member 4, and the cloth 6a of the right side cover member 6 is overlapped on the mesh cloth 6b. The same is applied to the folding operation of the left side cover member 5.

In order to stably maintain the folded state of each cover member and each part, it is preferable to provide connecting means such as a surface fastener at facing parts at the time of folding operation.

Next, configurations shown in Figs. 1 to 6 will be briefly described.

According to the states shown in Figs. 1 and 2, the laminated body 3 is positioned so as to cover the opening window 7 of the hood body 2. Since the front and both sides of the seat are open, sufficient ventilation can be provided.

Fig. 3 shows a state in which the laminate body 3 is hung down to the front and the opening window 7 of the hood body 2 is open. In order to maintain this configuration stably, a front guard member 8 of the baby carriage and the front cover member 4 may be connected through connecting means such as a surface fastener. According to the state shown in Fig. 3, since the upper part of the opening window 7 of the hood body 2 is open, a mother and the like who operates the baby carriage can observe child behavior through the opening window 7. In addition, even when the sunlight enters from above, since the sunlight passes through the mesh cloth attached on the opening window 7, the light intensity is alleviated. In addition, since the mesh cloth 4b of the front cover member 4 is also folded so as to be overlapped on the cloth of the front cover member 4 in addition to the left and right side cover members 5 and 6, the right and left sides of the seat is widely open.

Fig. 4 shows a state in which the mesh cloths 4b of the front cover member 4 are unfolded and the left and right side cover members 5 and 6 are folded and overlapped under the front cover member 4. In this state also, the right and left sides of the seat is open. For example, when the sunlight enters from the front, this configuration of the hood is employed.

Fig. 5 shows a state in which the front cover member 4 and the left side cover member 5 are exploded and the right side cover member 6 is overlapped under the front cover member 4. In this state, the right side of the seat is open. For example, when the sunlight enters form the left side of the seat, this configuration of the hood is employed.

Fig. 6 shows a state in which the front cover member 4 and the right side cover member 6 are exploded and the left side cover member 5 is overlapped under the front cover member 4. In this state, the left side of the seat is open. For example, when the sunlight enters form the right side of the seat, this configuration of the hood is employed.

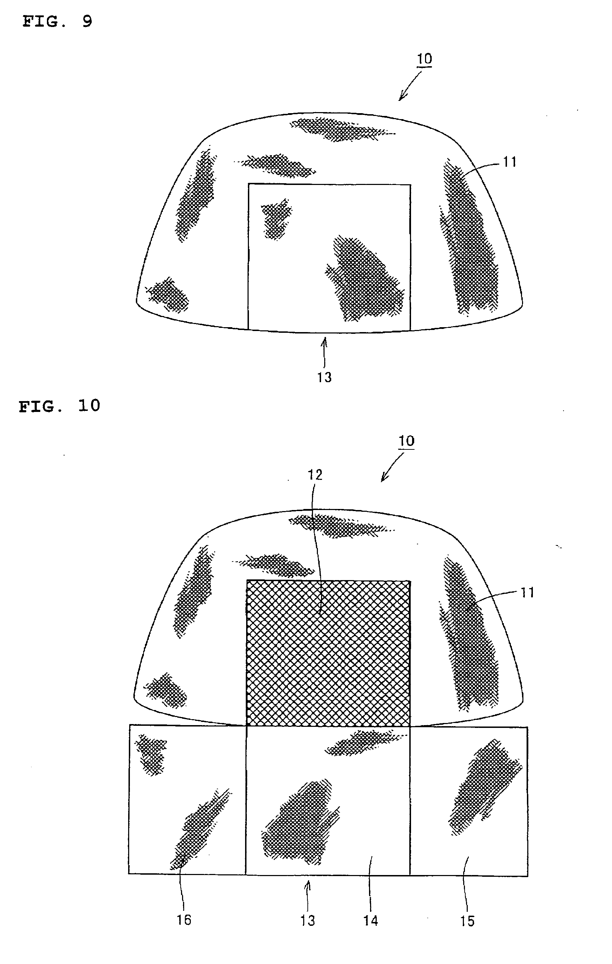

Figs. 9 and 10 show a hood 10 according to another embodiment of the present invention. The hood 10 comprises a hood body 11 having an opening window 12 lined with a mesh cloth, and a laminated body 13 provided so as to cover the opening window 12. As shown in the drawings, the opening window 12 and the laminated body 13 have a rectangular shape.

As shown in Fig. 10, the laminated body 13 comprises a rectangular front cover member 14 having one side connected to the hood body 11, a rectangular left side cover member 15 having one side connected to the front cover member 14, and a rectangular right side cover member 16 having one side connected to the front cover member 14.

In the embodiments shown in Figs. 9 and 10 also, the hood configuration can be flexibly changed according to the change in surrounding environment.

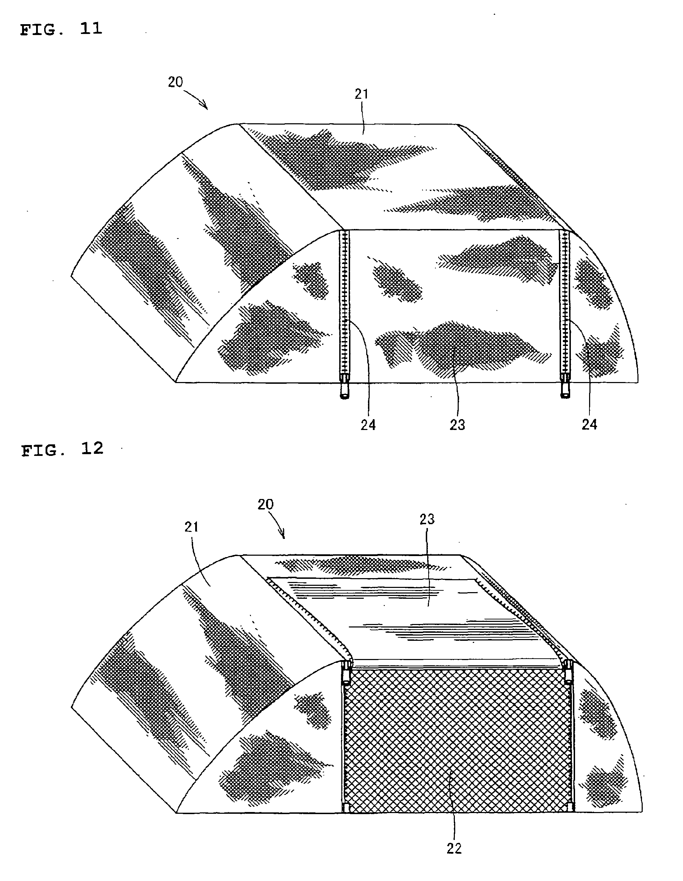

Figs. 11 and 12 show a hood 20 of a baby carriage according to still another embodiment of the present invention. The dorm-shaped hood 20 comprises a hood body 21 having opening windows 22 on the right and left sides, a left side cover member 23 covering the opening window 22 on the left side, and a right side cover member covering the opening window on the right side. According to the illustrated embodiment, the opening windows 22 is lined with a mesh cloth on each of the right and left sides. In addition, both sides of the left side cover member 23 are detachably connected to the hood body 24 through a sliding fastener 24. Similarly, both sides of the right side cover member are detachably connected to the hood body 24 through a sliding fastener.

According to a state shown in Fig. 11, the left side cover member 23 covers the opening window 22 on the left side, and the right side cover member covers the opening window on the right side. This configuration is employed when the baby in the seat is to be protected from wind or dust or when the space around the seat is to be darkened, for example.

According to a state shown in Fig. 12, the left side cover member 23 is folded so as to be overlapped on the hood body 21 and the opening window 22 on the left side is open. Although it cannot be confirmed from the drawing, the right side cover member still covers the opening window on the right side. This configuration is employed when some degree of ventilation is to be maintained in the seat while the sunlight from the right side is shielded, for example. In addition, as compared with the configuration shown in Fig. 11, since the opening window 22 lined with the mesh cloth is exposed, the seat is a little brighter.

Although it is not shown, still another configuration can be taken such that the right side cover member is folded so as to be overlapped on the hood body 21 and the opening window on the right side is open. In this configuration, the opening window 22 on the left side of the hood body 21 is still covered with the left side cover member 23. This configuration is employed when some degree of ventilation is to be maintained in the seat while the sunlight from the left side is shielded, for example.

Figs. 13 to 16 show a room child bed 200 as another example of the child-care instrument. The child bed 200 can be switched between a bed configuration and a chair configuration. The upper part of the child receiving space of the child bed 200 is covered with a hood 100. According to an illustrated embodiment, the hood 100 has a configuration that covers the child receiving space.

More specifically, the hood 100 has an inverted U shape and comprises a first hood bone 101 whose both sides are supported by the child bed 200, a first hood cloth 110 positioned anterior to the first hood bone 101, a second hood cloth 120 positioned posterior to the first hood bone, a second hood bone 102 having an inverted U shape so as to support the rear edge of the second hood cloth 120 and having both ends supported by the child bed 200, a third hood cloth 130 positioned posterior to the second hood bone 102, and a third hood bone 103 having an inverted U shape so as to support the rear edge of the third hood cloth 130 and having both ends supported by the child bed 200.

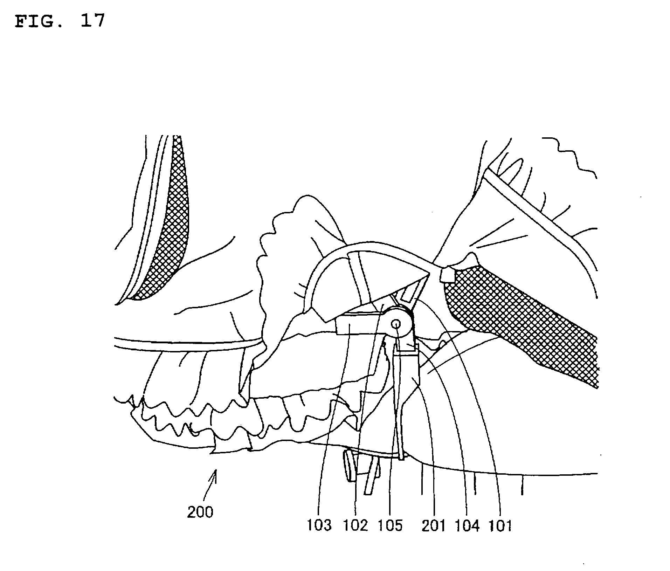

Fig. 17 shows a structure in the vicinity of the base ends of the first hood bone 101, the second hood bone 102 and the third hood bone 103. The base ends of the first, second and third hood bones 101, 102 and 103 are turnably supported by a base support 104 through a shaft 105. The base support 104 is detachably mounted on a chassis 201 fixed to the child bed 200. Preferably, each hood bone can be fixed at any angle in order to arbitrarily adjust the exploded angle formed between the adjacent hood bones.

The first hood cloth 110 positioned at the front comprises a first lower layer cloth 111 formed of a mesh cloth having a fine mesh, and a first upper layer cloth 112 that is overlapped on the first lower layer cloth 111 so as to be openable. The first upper layer cloth 112 comprises a left side first upper layer cloth 112a to cover the left side region of the first lower layer cloth 111 so as to be openable, and a right side first upper layer cloth 112b to cover the right side region of the first lower layer cloth 111 so as to be openable. The left and right side first upper layer cloths 112a and 112b are formed of a cloth having high light shielding effect, for example. According to the illustrated embodiment, the front region of the first lower layer cloth 111 is not covered with the upper layer cloths 112a and 112b.

As shown in Fig. 18, the first lower layer cloth 111 can be rolled up and retained. In the state shown in Fig. 18, the front of the child receiving space is completely open.

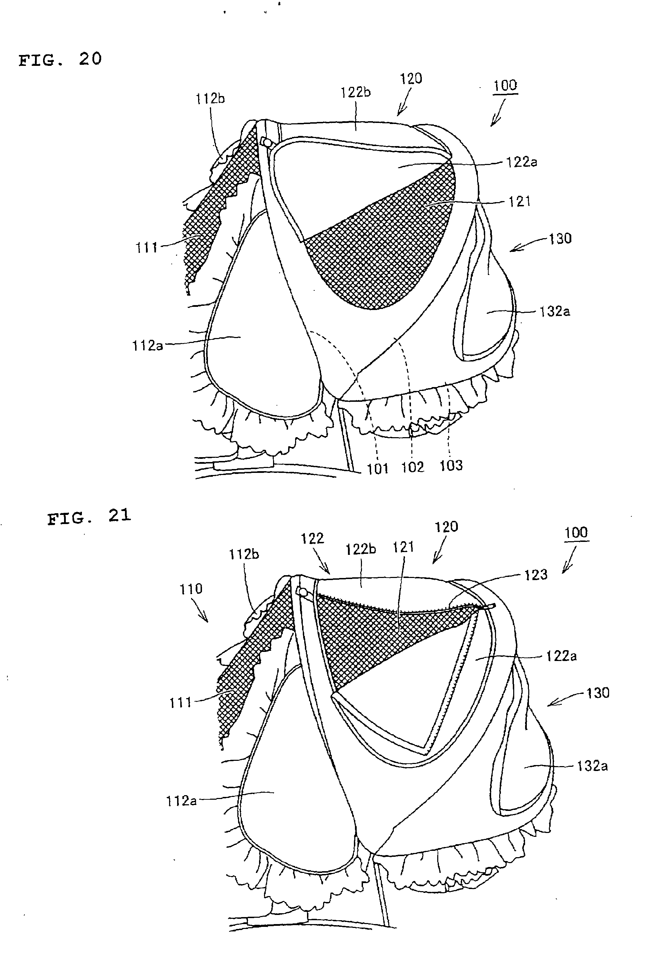

The second hood cloth 120 positioned between the first hood bone 101 and the second hood bone 102 comprises a window lined with a second lower layer cloth 121 comprising a mesh cloth (refer to Figs. 20 and 21), and a second upper layer cloth 122 covering the window so as to be openable. The second upper layer cloth 122 is formed of a cloth having a high light shielding effect, for example.

The second upper layer cloth 122 comprises a left side second upper layer cloth 122a to cover the left side region of the second lower layer cloth 121 so as to be openable, and a right side second upper layer cloth 122b to cover the right side region of the second lower layer cloth 121 so as to be openable. The left side second upper layer cloth 122a and the right side second upper layer cloths 122b are detachably connected through a surface fastener 123, for example. The second upper layer cloth 122 is detachably connected to the periphery of the window comprising the second lower layer cloth 121 through a surface fastener, for example.

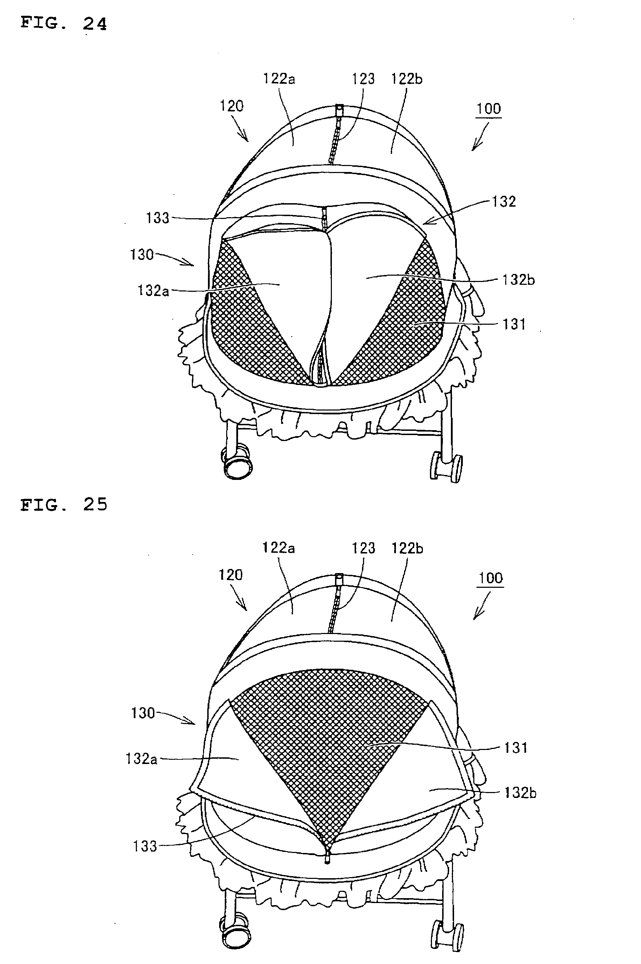

The third hood cloth 130 positioned between the second hood bone 102 and the third hood bone 103 comprises a window lined with a third lower layer cloth 131 comprising a mesh cloth (refer to Figs. 24 and 25), and a third upper layer cloth 132 covering the window so as to be openable. The third upper layer cloth 132 is formed of a cloth having a high light shielding effect, for example.

The third upper layer cloth 132 comprises a left side third upper layer cloth 132a to cover the left side region of the third lower layer cloth 131 so as to be openable, and a right side third upper layer cloth 132b to cover the right side region of the third lower layer cloth 131 so as to be openable. The left side third upper layer cloth 132a and the right side third upper layer cloth 132b are detachably connected through a surface fastener 133, for example. The third upper layer cloth 132 is detachably connected to the periphery of the window comprising the third lower layer cloth 131 through a surface fastener, for example.

According to the illustrated embodiment, the brightness of the child receiving space can be adjusted in several stages as will be described below.

In the states shown in Figs. 13 to 16, since the upper layer cloths 112a, 112b, 122a 122b, 132a and 132b having the high light shielding effect cover the lower layer cloths 111, 121 and 131, respectively, the child receiving space is darkest. However, even in this state, since the front region of the child receiving space is not covered with the first upper layer cloth 112, the mother can observe the child in the bed 200 through the lower layer cloth 111 comprising the mesh cloth.

In the state shown in Fig. 18, only the lower layer cloth 111 of the mesh cloth positioned at the front is rolled up and retained. In this state, since the front region of the child receiving space is completely open, the child receiving space is brighter than the completely closed state shown in Fig. 13.

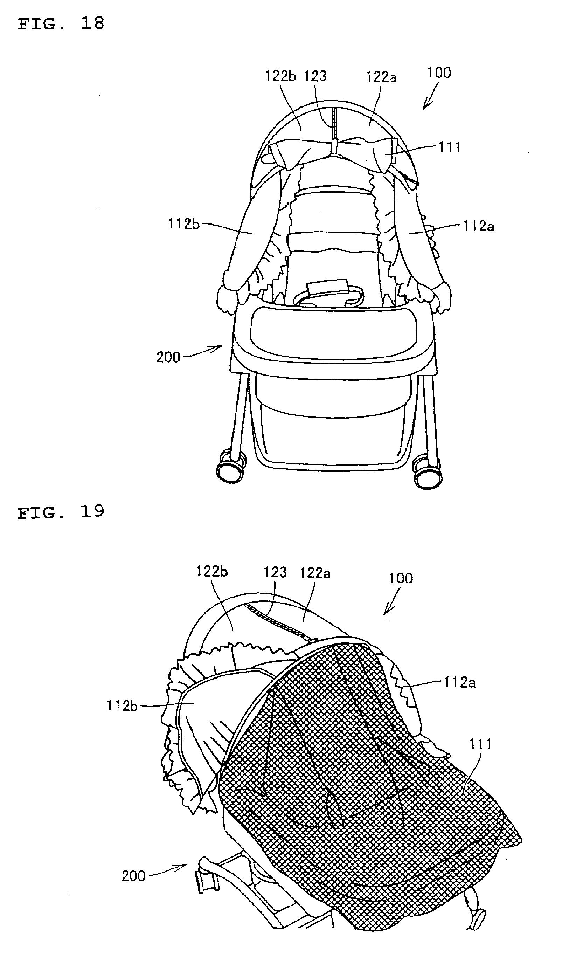

In the state shown in Fig. 19, only the right side first upper layer cloth 112b is turned up and the right side region of the first lower layer cloth 111 is exposed. The child receiving space in this state is a little brighter than the completely closed state shown in Fig. 13.

In the state shown in Fig. 20, the left side second upper layer cloth 122a is turned up to the right side and the left side region of the second lower layer cloth 121 is exposed. The child receiving space in this state is a little brighter than the completely closed state shown in Fig. 13.

In the state shown in Fig. 21, the sliding fastener 123 of the second upper layer cloth 120 is opened and the left side second upper layer cloth 122a and the right side second upper layer cloth 122b are separated. Furthermore, the left side second upper layer cloth 122a is turned up to the left side and the central region of the second lower layer cloth 121 is exposed. The child receiving space in this state is a little brighter than the completely closed state shown in Fig. 13.

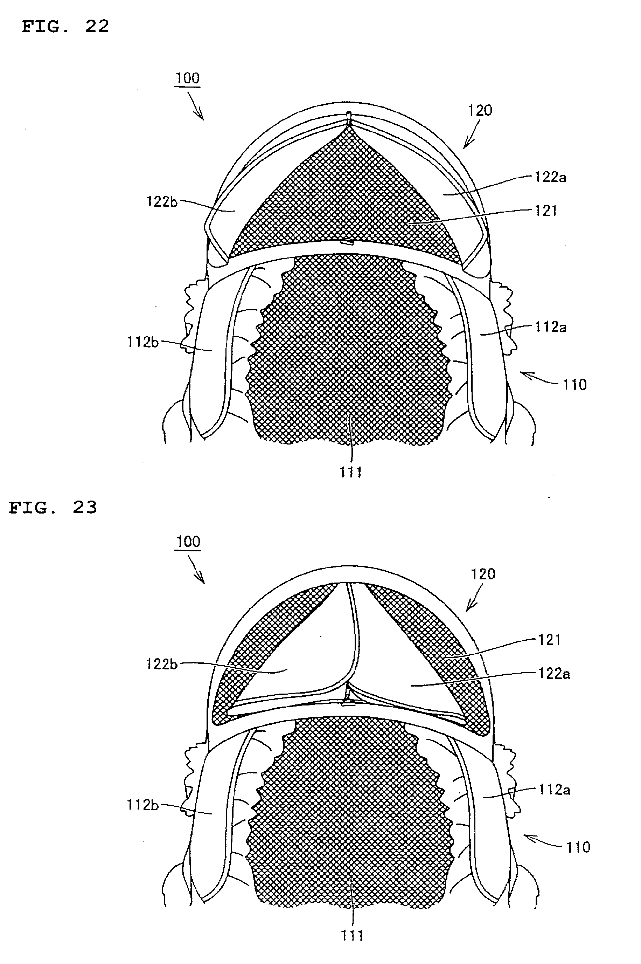

In the state shown in Fig 22, the right side second upper layer cloth 122b is also turned up to the right side from the state shown in Fig. 21.

In the state shown in Fig. 23, the right and left side regions of the second lower layer cloth 121 are exposed by folding the left side second upper layer cloth 122a and the right side second upper layer cloth 122b toward the center side.

In the state shown in Fig. 24, the right and left side regions of the third lower layer cloth 131 are exposed by folding the left side third upper layer cloth 132a and the right side third upper layer cloth 132b toward the center side.

In the state shown in Fig. 25, the sliding fastener 133 of the third upper layer cloth is opened to separate the left side third upper layer cloth 132a and the right side third upper layer cloth 132b. Furthermore, the central region of the third lower layer cloth 131 is exposed by folding the left side third upper layer cloth 132b and the right side third upper layer cloth 132a to the left and right sides, respectively.

As described above, the brightness of the child receiving space of the child bed 200 can be adjusted in several stages by appropriately adjusting open and closed states of the left side first upper layer cloth 112a, the right side first upper layer cloth 112b, the left side second upper layer cloth 122a, the right side second upper layer cloth 122b, the left side third upper layer cloth 132a and the right side third upper layer cloth 132b.

In addition, although at least one hood bone is needed to maintain a three-dimensional shape of the hood 100, the second hood bone 102 and the third hood bone 103 may be omitted. In this case, the hood only comprises a first hood bone 101 and first and second cloths 110 and 120 positioned anterior and posterior to it.

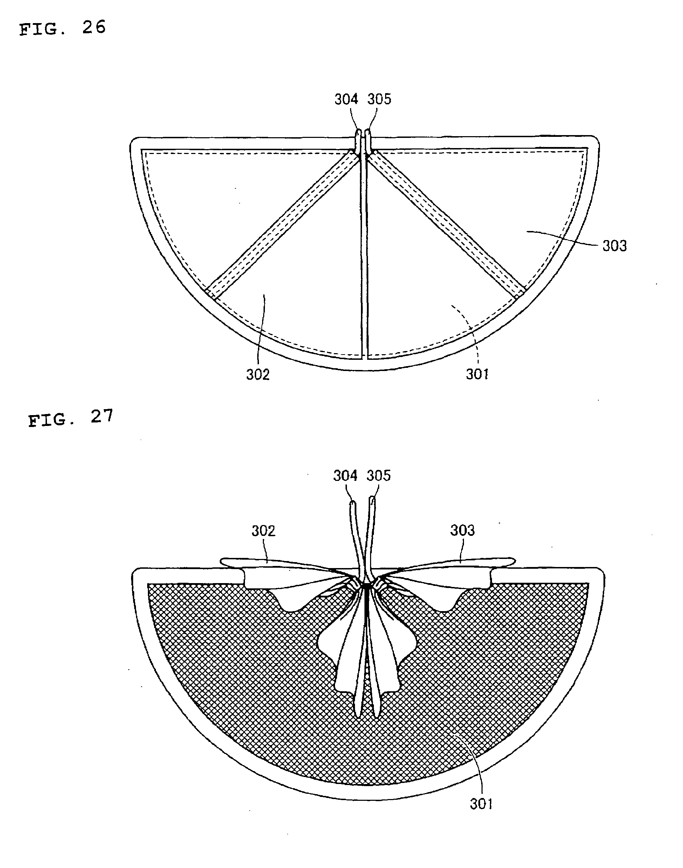

Figs. 26 and 27 are schematic views showing another configuration of the hood. Quarter circular left side upper layer cloth 302 and right side upper layer cloth 303 are provided so as to be overlapped on a semicircular lower layer cloth 301. The lower layer cloth 301 is formed of a mesh cloth.

A string 304 is passed through approximately the center of the left side upper layer cloth 302. The end of this string 304 is connected to the lower edge of the left side upper layer cloth 302. Similarly, a string 305 is passed through approximately the center of the right side upper layer cloth 303. The end of this string 305 is connected to the lower edge of the right side upper layer cloth 303.

Fig. 26 shows a state in which the whole lower layer cloth 301 is covered with the left and right upper layer cloths 302 and 303. When the strings 304 and 305 are pulled upward from the above state, the lower edges of the left and right upper layer cloths 302 and 303 are pulled upward. Finally, as shown in Fig. 27, the left and right upper layer cloths 302 and 303 are folded like a ribbon and the lower layer cloth 301 is exposed. Thus, according to the structure in which the upper layer cloths 302 and 303 are folded into the ribbon shape, its design is interesting.

Figs. 28 and 29 are schematic views showing still another configuration of the hood. In Fig. 28, a phantom line designates a hood cloth 406 as a cover part. In addition, Fig. 29 is a schematic plan view showing the hood cloth 406 as the cover part.

As shown in Fig. 28, a hood 400 comprises a support member 401 detachably mounted on a child-care instrument body such as a baby carriage, an inverted U-shaped first hood bone 403 having a lower end turnably connected to the support member 401 through a connection shaft 402, an inverted U-shaped second hood bone 404 positioned posterior to the first hood bone 403 and having a lower end turnably connected to the support member 401 through the connection shaft 402, and an inverted U-shaped third hood bone 405 positioned posterior to the second hood bone 404 and having a front end turnably connected to the support member 401 through the connection shaft 402. A ratchet engagement part is formed at the abutment part between each of the hood bones 403, 404 and 405 and the support member 401 so as to surround the connection shaft 402, for example. Therefore, each of the hood bones 403, 404 and 405 can be fixed at any angle.

The hood cloth 406 covering the hood 400 comprises a front part 410 positioned anterior to the first hood bone 403, a central part 411 positioned between the first hood bone 403 and the second hood bone 404, and a rear part 412 positioned posterior to the second hood bone 404. The front edge of the hood cloth 406 is connected to the front part of the seat of a child-care instrument, for example. In addition, when the rear edge of the hood cloth 406 is connected to the rear end of the seat of the child-care instrument, the third hood bone 405 may be omitted.

Preferably, each of the front part 410, the central part 411 and the rear part 412 of the cover part 406 has a plurality of brightness adjusting regions. More specifically, as shown in the schematic plan view shown in Fig. 29, the front part 410, the central part 411 and the rear part 412 have middle regions 410a, 411a and 412a having a brightness adjusting function, and side regions 410b, 411b and 412b positioned on both sides of the middle regions 410a, 411a and 412a and having the brightness adjusting function, respectively. According to the above constitution, since the cover part 406 of the hood 400 can be divided into nine regions each having the brightness adjusting function, the brightness of the child receiving space can be freely and optimally adjusted.

In addition, according to one example of the structure to provide the brightness adjusting function, the cover part of each region comprises two cloths in which a lower layer cloth is made of a mesh cloth and an upper layer cloth is made of a material having a UV shielding function.

The above embodiments can be applied to a child-care instrument such as a child bed used in a room, a child-car seat set in a car, a baby carriage used out of doors and the like.

Although the embodiments of the present invention have been described with reference to the drawings in the above, the present invention is not limited to the above-illustrated embodiments. Various kinds of modifications and variations may be added to the illustrated embodiments within the same or equal scope of the present invention.

### INDUSTRIAL APPLICABILITY

The present invention can be advantageously applied to a child-care instrument or a hood having a brightness adjusting function.

## Claims

1. A child-care instrument comprising:
a body forming a child receiving space; and
a hood mounted on said body so as to cover the upper part of said child receiving space, wherein
said hood comprises a cover part spreading over the upper part of said child receiving space, and
said cover part comprises a plurality of brightness adjusting regions each having a brightness adjusting function for transmitted light.

2. The child-care instrument according to claim 1, wherein
said plurality of brightness adjusting regions are positioned on the right and left sides.

3. The child-care instrument according to claim 1, wherein said plurality of brightness adjusting regions are positioned on the front, rear, right and left sides.

4. The child-care instrument according to claim 1, wherein
each of said plurality of brightness adjusting regions comprises an inner sheet positioned inside and an outer sheet overlapped on said inner sheet, and
said outer sheet is provided so as to be openable.

5. The child-care instrument according to claim 4, wherein
said inner sheet is made of a mesh cloth.

6. The child-care instrument according to claim 4, wherein
said outer sheet is made of a material that shields ultraviolet rays.

7. The child-care instrument according to claim 1, wherein
said hood comprises a support member mounted on said body, a first hood bone having a lower end turnably connected to said support member, and a second hood bone positioned posterior to said first hood bone and having a lower end turnably connected to said support member,
said cover part comprises a front part positioned anterior to said first hood bone, a central part positioned between said first hood bone and said second hood bone, and a rear part positioned posterior to said second hood bone, and
each of said front part, central part and rear part of the cover part has a plurality of brightness adjusting regions.

8. The child-care instrument according to claim 7, wherein each of the front part, the central part and the rear part of the cover part has a middle region having a brightness adjusting function, and side regions positioned on both sides of the middle region and having the brightness adjusting function.

9. The child-care instrument according to claim 7, wherein said hood further comprises a third hood bone connected to the lower edge of the rear part of said cover part and having a front end turnably connected to said support member.

10. A hood of a child-care instrument, **characterized in that** opening states on right and left sides can be independently adjusted.

11. A hood of a child-care instrument comprising :
a hood body;
a front cover member connected to the front edge of said hood body to cover the front of a seat; and
right and left side cover members connected to the right and left side edges of said front cover member to cover the right and left sides of the seat, respectively, wherein
said right and left side cover members are folded so as to be overlapped on said front cover member,
a laminated body of said front cover member and said right and left side cover members is folded so as to be overlapped on the upper surface of said hood body.

12. The hood of the child-care instrument according to claim 11, wherein
said hood body has an opening window at its upper surface, and
said laminated body of said front cover member and said right and left side cover members is folded so as to cover said opening window.

13. The hood of the child-care instrument according to claim 12, wherein
said opening window is lined with a mesh cloth.

14. The hood of the child-care instrument according to claims 12, wherein
said opening window has a triangular configuration in which the front edge of said hood body is a base, and
said laminated body of said front cover member and said right and left side cover members has a triangular configuration in which the front edge of said hood body is a base and folded so as to cover said opening window.

15. A hood of a child-care instrument comprising :
a hood body having opening windows on the right and left sides;
a left side cover member covering said opening window on the left side; and
a right side cover member covering said opening window on the right side.

16. The hood of the child-care instrument according to claim 15, wherein
each of said opening windows on the right and left sides is lined with a mesh cloth.

17. A hood of a child-care instrument for covering the upper part of the child receiving space of a child-care instrument comprising:
a first hood bone having an inverted U shape and having both ends supported by a child-care instrument body;
a first hood cloth positioned anterior to said first hood bone; and
a second hood cloth positioned posterior to said first hood bone, wherein
said first hood cloth comprises a first lower layer cloth and a first upper layer cloth to be overlapped on the first lower layer cloth so as to be openable,
said first upper layer cloth comprises a left side first upper layer cloth covering the left side region of said first lower layer cloth so as to be openable, and a right side first upper layer cloth covering the right side region of said first lower layer cloth so as to be openable,
said second hood cloth comprises a second lower layer cloth and a second upper layer cloth to be overlapped on the second lower layer cloth so as to be openable, and
said second upper layer cloth comprises a left side second upper layer cloth covering the left side region of said second lower layer cloth, and a right side second upper layer cloth covering the right side region of said second lower layer cloth so as to be openable.

18. The hood of the child-care instrument according to claim 17 comprising:
a second hood bone having an inverted U shape so as to support the rear edge of said second hood cloth and having both ends supported by the child-care instrument body; and
a third hood cloth positioned posterior to said second hood bone, wherein
said third hood cloth comprises a third lower layer cloth and a third upper layer cloth to be overlapped on the third lower layer cloth so as to be openable, and
said third upper layer cloth comprises a left side third upper layer cloth covering the left side region of said third lower layer cloth, and a right side third upper layer cloth covering the right side region of said third lower layer cloth so as to be openable.

19. The hood of the child-care instrument according to claim 18, further comprising a third hood bone having an inverted U shape so as to support the rear edge of said third hood cloth and having both ends supported by the child-care instrument body.

20. The hood of the child-care instrument according to claim 19, further comprising a base support turnably supporting said first hood bone, said second hood bone and said third hood bone, wherein
said base support is detachably connected to the child-care instrument body.

21. The hood of the child-care instrument according to claim 17, wherein said each lower layer cloth is made of a mesh cloth, and
said each upper layer cloth is made of a material having a high light shielding effect.

22. The hood of the child-care instrument according to claim 17, wherein
said first lower layer cloth is designed to be rolled up.
